# EUROPEAN PATENT SPECIFICATION

(11) **EP 0 583 228 B1**
(45) Date of publication and mention of the grant of the patent: **05.11.1997**
(21) Application number: 93830349.2
(22) Date of filing: 06.08.1993
(51) Int. Cl.: C08L 53/02

(54) **Polymer compounds consisting of high purity multi-unit SBS polymers**
Polymerverbindungen, bestehend aus Polymeren hoher Reinheit, die mehrere SBS-Einheiten enthalten
Composés de polymères se composant de polymères de grande pureté contenant plusieurs unités SB

(30) Priority: 10.08.1992 IT AN920028
(43) Date of publication of application: 16.02.1994
(73) Proprietor: TECNOFILM S.p.A., 60044 Fabriano (AN) (IT)
(72) Inventor: Perozzi, Gianni, I-62012 Civitanova Marche (MC) (IT); Balducci, Sandro, I-63017 Porto San Giorgio (AP) (IT)
(74) Representative: Baldi, Claudio

(56) References cited:
- EP-A- 0 410 888
- EP-A- 0 482 740
- US-A- 3 576 911
- DATABASE WPI Week 9236, Derwent Publications Ltd., London, GB; AN 92-295604 & JP-A-4 202 446 (DAICEL HUELS) 23 July 1992
- DATABASE WPI Week 9236, Derwent Publications Ltd., London, GB; AN 92-295604 & JP-A-4 202 446

## Description

This design patent application concerns polymer compounds consisting of high purity multi-unit SBS polymers with good sanding properties making them suitable for use in the footwear sector for the production of footwear accessories and components in moulded synthetic materials.

Styrene-butadiene-styrene (SBS) or styrene-isoprene-styrene (SIS) based thermoplastic rubber (TR) compounds currently available and used are not extremely practical in that when the moulded end product is sanded with abrasive paper, chips, which melt with the heat caused by friction, are formed, and adhere to the abrasive paper making it unusable in a relatively short time.

This problem can indirectly cause unwanted spoiling of the non elastomer surfaces against which the soiled abrasive paper rubs, such as leather or textiles used for manufacturing footwear uppers.

The molten chips also tend to stick to the surface of the article during production and cover it with a thin layer of polymer which causes considerable problems during the successive varnishing phase.

The purpose of this invention is to develop S.B.S. based compounds which can resolve all the above problems while providing the properties typical of rubber to the article moulded in the same, such as excellent mechanical properties in terms of elongation, low density and good ground adherence, even at low temperatures.

Some of the compounds also offer good resistance to mineral oils without reducing their gluing properties, as often occurs in footwear components and accessories.

This resistance to oils has in particular been ascertained in products using pre- and post-reticulated polymers or thermoplastic polyurethane matrices.

This invention concerns polymer compounds consisting of a matrix-compound, possibly in combination with polyalkenylene polymers, pre- or post-reticulated elastomers, thermoplastic elastomers and mixtures thereof.

Matrix-compound (M) consists of the following:
a) 100 parts by weight of one or more linear multi-block copolymers of type (A-B-B-A)x, or (A-B-A-B-)x where x is 1 or more than 1 and the sequence of units (A) and (B), or mixture of those, is not necessarily in the given order; each unit (A) consists of a polymer derived from monoalkenyl-arenes (where the alkenyl group has no more than three carbon atoms), having an average molecular weight between 5000 and 75000; each unit (B) consists of an elastomer polymer derived from monomers containing conjugated double bonds and having an average molecular weight between 15000 and 350000. The total concentration of units (A) is between 10% - 85% by weight of the total polymer chain.
b) 0 - 150 inorganic or organic charges such as carbonates, sulfates, more or less hydrated oxides, Ca, Mg silicates;
c) 0 - 150 parts of extensive oil such as paraffin or naphthenic oil;
d) 0 - 150 parts of additives, antioxidants, antistatics, anti UV, stabilizers, dull-smooth agents ----- expanders;
e) 0 - 70 parts of radial, multi-unit elastomer polymers type (A-B)x-BA, where x is greater than 1, (A) a polymer derived from a mono-alkenyl-arene having an average molecular weight between 5000 and 75000 and (B) an elastomer polymer derived from conjugated diene-olefines C₄, C₅ having an average molecular weight between 12000 and 300000 with said unit (A) being 8%-90% of the total polymer weight.

Experiments have demonstrated that articles moulded in the above matrix-compound (M), of which formula SPC 029 in the enclosed table is an example, can be milled without the risk of encountering the above problems.

The sanding properties of matrix-compound (M) can be improved very considerably by suitably combining matrix (M) with different kinds of polymers such as polyalkenylene (TYPE 1), pre- or post-reticulated elastomers (TYPE 2) or thermoplastic elastomers (TYPE 3).

(TYPE 1), which is derived from the first of these three combinations - of which formula SPC 031 is an example - consists of:
A) the above matrix (M)
and
B1) 0 - 150 parts, based on the linear multi-block polymer of said matrix compound (M), of an alkenylene polymer derived from monomers having C₄₋₁₆ carbon atoms, where the trans bonds represent 60%-100% of the total unsaturated bonds; said polymer is of the type -(CR₁R₂)x-C=C-(CR₃R₄)y- where x and y can independently be comprised between 1 - 8, while R₁, R₂, R₃, R₄ = H or an alkyl radical having C₁₋₃.
(TYPE 2) which is derived from the second of these three combinations - of which formula SPC 030 is an example - consists of:
A) the above matrix (M)
and
B2) 0 - 150 parts, based on the multi-block linear polymer of matrix-compound (M), a reticulated elastomer polymer manufactured with chemical or physical agents which do not modify the thermoplastic elastomer matrix or 5 - 150 parts of a pre-reticulated elastomer joined to the compound.
The dispersion process in both cases must result in dispersed matrix particles inferior to 1.0 millimetres. The following groups of products can be used: nitrile rubber, SBR rubber, EPDM rubber, polyurethane elastomers, polyester elastomers. Other types of reticulated elastomer polymers may be suitable in that their function is essentially physical, that is, it has an aggregating action on the expelled thermoplastic particles which are at the mass cooling limit.
(TYPE 3) which is derived from the third of these three combinations - of which formula SPC 038 shown in the enclosed table is an example - consists of:
A) the above matrix (M)
and
B3) 0 - 150 parts, based on a non-reticulated thermoplastic elastomer polymer, partially compatible with matrix-compound (M) in quantities which prevent separation of the matrices.

Elastomer polymers, polyurethane and polyester are suitable for use.

As in the previous case (TYPE 2), this function can be performed by other thermoplastic elastomer polymers in view of their physical and non chemical function.

Mixing matrix (M) with a combination of the products (B1, B2, B3 and B4) results in a series of compounds (TYPE 4) - of which formula SPC 035 in the enclosed table is an example - with intermediate sanding properties with respect to those of the above three (TYPE 1, TYPE 2 and TYPE 3) compounds.

It should be noted that the compounds according to this invention are prepared according to standard experimental preparation techniques, one of which, namely that used in this particular case, involves dry mixing of the various components (first the rubbers and resins, then the charges together with the extensive oil), followed by 5-10 minutes of homogenizing; the mixture is then processed in a twin-screw extruder at 180°C and then granulated.

A detailed description is now provided of some composition examples of the component a) used for matrix (M) and of the components (B1, B2, B3) used for TYPE 1, TYPE 2 and TYPE 3.

The component referred to in point a) of matrix (M) is a linear block copolymer or mixture thereof of type (A-B-B-A-)x or (A-B-A-B-)x, where x=1 or is greater than 1 and the sequence of units (A) and (B) or mixture thereof is not necessarily in the given order; unit (A) is a polymer derived from alkenyl arene having an alkenyl chain of 2 or 3 C atoms, and unit (B) is an elastomer derived from monomers containing conjugated double bonds of 4 or 5 carbon atoms, or a mixture thereof.

Generally, (A) consists of polystyrene units and (B) of polybutadiene even if (A) may consist of polyalphamethylstyrene or polymethylstyrenes, and (B) of polyisoprene, polybutadiene or mixture thereof.

The purity of the multi-block copolymer must be more than 93% while the di-unit and homopolymer content must be inferior to 5%.

This purity is less critical in the case of compounds containing polyalkenylene in that its cooling efficacy during milling and rapid crystallization compensates for the negative effects of the by-products which are responsible for adherence due to melting to the abrasive surface.

The average molecular weight of the polymers derived from alkenyl arene unit (A) may be between 5000 - 75000, even though preferably it should be between 8000 - 50000.

The average molecular weight of elastomer polyolefin unit (B), derived from diene monomer (C₄-C₅) may be between 15000 - 350000, even though preferably it should be between 20000 - 130000.

The concentration of unit derived from monalkenyl arene is between 10% - 85%, even though preferably it should be between 20% - 60% of the weight of the polymer.

The component as per point (B1) of composition (TYPE 1) is a polyalkenylene type -(CR₁R₂)x-C=C-(CR₃CR₄)y- where x and y can independently be comprised between 1 - 8, while R₁, R₂, R₃, R₄ = H or an alkyl radical having no more than 3 carbon atoms, which should preferably be a poly-heptylene, a poly-octylene or a poly-nonylene (starting monomers C7, C8 or C9); the content in trans double bonds must be greater than 60% and preferably superior to 75%; crystallinity must be greater than 15% and preferably superior to 30%.

In the formula shown in the enclosed table 1 - i.e. formula SPC 031 - a poly-octylene having the following characteristics was used: MOONEY viscosity (ML4) at 60°C = 12, melting point 53-55°C, trans double bonds = 78-83%, crystallinity = 33%.

The component referred to in point (B2) of composition TYPE 2 is a pre-reticulated elastomer polymer which joins the thermoplastic rubber particles formed during abrasion; its chemical properties are consequently less important than its physical properties which include, a certain degree of gumminess which is ideal for SBS copolymers, granulometry under 1 millimetre, bonding-aggregating action on the thermoplastic chips; this polymer has the function of an organic charge and can be extensively dampened by the thermoplastic, so that pre- and post-reticulated copolymers and polymers can be successfully used for this purpose such as: nitrile (rubber), SBR EPDM polyurethanes, polyesters.

The component referred to in point B3) of composition TYPE 3 is a thermoplastic elastomer polymer, which is partially compatible with the linear SBS matrix; the component may belong either to the polyurethane or polyester/ether groups. This product may be dispersed more efficiently in the matrix, with respect to its corresponding pre-reticulated polymer; the end result is a granulometry inferior to 0.3 mm up to extremely low values of the product dispersed, thanks also to the cutting action of the screw extruder used.

These products have an aggregating action on the chips and do not melt on the abrasive material.

A commercial thermoplastic polyurethane sold by ICI was used in formula SPC 038 of composition (TYPE 3). Said thermoplastic polyurethane has the following characteristics: MELT INDEX (5 kg. at 190°C for 10 minutes = 22 grammes), density 1.01 g/cu.cm, SHORE A hardness 63, moulding at 180°C, ultimate tensile strength 200 kg/sq.cm, elongation 900%. Similar thermoplastic polyurethanes, even with very different chemical-physical properties, may be used, provided they can be processed and mixed with the SBS matrix, since these products do not have a precise chemical function, but only a physical function which can be assimilated to an organic charge.

Table 1 shows examples of formulas derived from matrix (M), both from the compositions of TYPE 1, TYPE 2, TYPE 3 and TYPE 4, having the following respective codes SPC 029, SPC 031, SPC 030, SPC 038 and SPC 035.

**TABLE 1**

| FORMULA COMPOSITION | TYPE 1 SPC 031 | TYPE 2 SPC 030 | TYPE 3 SPC 038 | MATRIX (M) SPC 029 | TYPE 4 SPC 035 |
|---|---|---|---|---|---|
| PRODUCTS | PHR | PHR | PHR | PHR | PHR |
| a) SBS (LINEAR) (1) | 68 | 68 | 68 | 68 | 68 |
| a) SBS (LINEAR) (2) | 23 | 23 | 23 | 23 | 23 |
| a) TOTAL SBS RESINS | 100 | 100 | 100 | 100 | 100 |
| | | | | | |
| B1 POLYOCTYLENE | 23 | | | | 8 |
| B2 P83 CHEMIGUM (NITRILE) | | 34 | | | 11 |
| B3 ICI POLYURETHANE | | | 34 | | 11 |
| b) Ca CARBONATE (3) | 23 | 23 | 23 | 23 | 22 |
| c) NAPHTHENIC OIL | 25 | 25 | 25 | 25 | 25 |
| d) ANTISTATIC | 0.5 | 0.5 | 0.5 | 0.5 | 0.5 |
| e) SOL T 161 (RADIAL) | 9 | 9 | 9 | 9 | 9 |
| | | | | | |

| CHARACTERISTICS (analysis method) | | | | | |
|---|---|---|---|---|---|
| | | | | | |
| ABRASION (DIN 53516) | 188 | 235 | 240 | 185 | 193 |
| ULTIMATE TENSILE STRENGTH (DIN 53504) | 49 | 38 | 40 | 47 | 42 |
| ULTIMATE ELONGATION (DIN 53504) | 620 | 700 | 670 | 725 | 670 |
| SHORE A HARDNESS (DIN 53505) | 73 | 63 | 56 | 69 | 68 |
| DENSITY (DIN 53479) | 1.025 | 1.044 | 1.056 | 1.040 | 1.035 |
| MELT FLOW (DIN 53735) | 27 | 21 | 36 | 39 | 32 |

| RESULTS | | | | | |
|---|---|---|---|---|---|
| MOULDING PROPERTIES (4) | 7 | 5 | 5 | 9 | 6 |
| MILLING PROPERTIES (5) | 9-10 | 8 | 8 | 4 | 9 |

| | | | | | |
|---|---|---|---|---|---|
| (1) TRI-UNIT LINEAR SBS HAVING A MOLECULAR WEIGHT OF 60000 AND WHOSE SINGLE S-B-S UNITS WEIGH 12900-34200-12900 RESPECTIVELY, CONTENT IN S-B DI-UNIT INFERIOR TO 1%, STYRENE CONTENT 43% OF THE TOTAL, M.F.I. (190° 5Kg.) APPROX. 15 | | | | | |
| (2) TRI-UNIT LINEAR SBS HAVING A MOLECULAR WEIGHT OF 60000 AND WHOSE SINGLE S-B-S UNITS WEIGH 11600-56800-11600 RESPECTIVELY, CONTENT IN S-B DI-UNIT INFERIOR TO 1%, STYRENE CONTENT 29% OF THE TOTAL, M.F.I. (190° 5Kg) approx. 8 | | | | | |
| (3) A HIGH QUANTITY OF AGGREGATES WERE PURPOSELY USED TO PROVIDE THE MOST CRITICAL MECHANICAL CONDITIONS. | | | | | |
| (4) VALUES 1 - 10 (10 IS THE IDEAL VALUE) | | | | | |
| (5) VALUES 1 - 10 (10 IS THE IDEAL VALUE); CONVENTIONAL TR IS ESTIMATED TO BE INFERIOR TO 1) | | | | | |

## Claims

1. Polymer compounds consisting of high purity multi-unit SBS polymers, characterized in that the same consist of a matrix-compound (M), possibly in combination with polyalkenylene polymers, pre- or post-reticulated elastomers, thermoplastic elastomers or mixtures thereof, where said matrix-compound (M) comprises:
a) 100 parts by weight of one or more linear multi-block copolymer of type (A-B-B-A)x or (A-B-A-B-)x where x is 1 or greater than 1 and the sequence of units (A) and (B), or mixture of both, is not necessarily in the given order; wherein such multi-block copolymer has a purity higher than 93% and a di-unit and homopolymer content lower than 5%. each unit (A) consists of a polymer composed by mono-alkenyl-arenes (where the alkenyl group has no more than three carbon atoms), having an average molecular weight between 5000 and 75000; each unit (B) consists of an elastomer polymer formed by monomers containing conjugated double bonds and having an average molecular weight between 15000 and 350000, the total concentration of the units (A) is between 10% - 85% by weight of the total polymer chain;
b) 0 - 150 inorganic or organic charges such as carbonates, sulfates, more or less hydrated oxides, Ca, Mg silicates;
c) 0 - 150 parts of extensive oil like paraffin or naphthenic oils;
d) 0 - 150 parts of additives, antioxidants, antistatics, anti UV, stabilizers, dull-smooth agents ---- expanders;
e) 0 - 70 parts of radial multi-unit elastomer polymers type (A-B)x-BA, where x is greater than 1, and (A) is a polymer formed by mono-alkenyl-arenes having an average molecular weight between 5000 and 75000 and (B) is an elastomer polymer formed by conjugated diene-olefines C₄, C₅ having an average molecular weight between 12000 and 300000; said unit (A) being 8 - 90% of the total polymer weight.

2. Polymer compounds according to claim 1 comprising:
(A) the above matrix-compound (M)
and
B1) 0 - 150 parts, based on the linear multi-block polymer of said matrix compound (M), of an alkenylene polymer formed by monomers having C₄₋₁₆ where the trans bonds represent 60% - 100% of the total unsaturated bonds.

3. Polymer compounds according to claim 2 where said alkylene polymer has the following formula -(CR₁R₂)x-C=C-(CR₃R₄)y- where x and y are independently between 1 - 8 and R₁, R₂, R₃, R₄ are H or an alkyl radical having C₁₋₃.

4. Polymer compounds according to claim 1 consisting of:
A) the above matrix-compound (M)
and
B2) 0 - 150 parts, based on the multi-block linear polymer of matrix-compound (M) of an elastomer polymer manufactured with chemical or physical agents which do not modify the thermoplastic elastomer matrix or 5 - 150 parts of a pre-reticulated elastomer joined to the compound.

5. Polymer compounds according to claim 4 where said elements are: nitrile rubber, SBR rubber, EPDM rubbers, polyurethane elastomers, polyester elastomers in that the dimensions of the particles of the dispersed matrix must be inferior to 1 mm.

6. Polymer compounds according to claim 1 consisting of:
A) the above matrix-compound (M)
and
B3) 0 - 150 parts, based on the multi-block linear polymer of matrix-compound (M), of a non reticulated thermoplastic elastomer polymer, partially compatible with matrix-compound (M) in a quantity which does not result in a separation of the matrices.

7. Polymer compounds according to claim 6 where component B3 is polyurethane, polyester.

8. Polymer compounds according to claim 1 consisting of a matrix-compound (M) and a combination of the above compounds (B1, B2 and B3).

9. Polymer compounds according to claim 1 where component a) of the matrix-compound (M) is a linear multi-block copolymer, or a mixture thereof, of type (A-B-B-A-)x or (A-B-A-B-)x where x is 1 or greater, and the sequence of units (A) and (B) or mixture thereof is not necessarily in the given order; (A) being a polymer consisting of an alkenylarene having an alkenyl chain of 2 or 3 C atoms, and (B) being an elastomer consisting of monomers containing conjugated double bonds of 4 or 5 carbon atoms, or a mixture thereof; where the average molecular weight of the polymers derived from the alkenyl arene unit (A) is between 8000 and 50000, while the average molecular weight of the elastomer polyolefin unit (B) derived from diene (C₄-C₅) is between 20000 - 130000 and the concentration of unit (A) is preferably between 20% - 60%.

10. Polymer compounds according to claim 9 where unit (A) in component a) of matrix-compound (M) is polystyrene.

11. Polymer compounds according to claim 9 where unit (B) in component a) of matrix-compound (M) is polybutadiene.

12. Polymer compounds according to claim 2 where component (B1) of composition TYPE 1 is a polyalkenylene of formula-(CR₁R₂)x-C=C-(CR₃CR₄)y- where x and y are independently between 1 - 8 and R₁, R₂, R₃, R₄ = H or an alkyl radical with C₁₋₃ preferably a poly-heptylene, poly-octylene, poly-nonylene (starting monomers C₇₋₉) ·

13. Polymer compounds according to claim 12 where the trans double bonds content is greater than 60% but preferably greater than 75% while crystallinity is greater than 15% but preferably more than 30%.

14. Polymer compounds according to claim 4 where component (B2) of composition TYPE 2 is a polymer or a pre- or post-reticulated co-polymer.

15. Polymer compounds according to claim 14 where (B2) is a nitrile rubber, SBR, EPDM, polyurethane, polyester.

16. Polymer compounds according to claim 6 where component (B3) is a thermoplastic elastomer polymer.

17. Polymer compounds according to claim 16 where the thermoplastic elastomer polymer is partially compatible with the linear SBS matrix.

18. Polymer compounds according to claim 16 where the thermoplastic elastomer polymer is a polyurethane or polyester/ether.

## Patentansprüche

1. Polymerverbindungen aus mehrblöckigen SBS-Polymeren von hoher Reinheit dadurch gekennzeichnet, daß sie eine Matrix-Verbindung (M) eventuell in Kombination mit Polyalkenylpolymeren, vor- und nachvernetzten Elastomeren, thermoplastischen Elastomeren oder deren Mischungen enthalten, wobei besagte Matrix-Verbindung (M) aus folgendem besteht:
a) 100 Gewichtsteilen eines oder mehrerer linearer Mehrblockpolymere des Typs (A-B-B-A)x oder (A-B-A-B-)x, wobei x gleich 1 oder höher als 1 ist und die Einheitsfolge (A) und (B) oder eine Mischung der beiden nicht unbedingt in der angegebenen Reihenfolge ist, und wobei das besagte mehrblöckige Kopolymer einen Reinheitsgrad aufweist, der höher als 93% ist und wobei der Diblock- und Homopolymergehalt niedriger als 5% ist; jeder Block (A) besteht aus einem Polymer, das aus einem Monoalkenylaren stammt (wobei die maximale Alkenylgruppe C3 ist), dessen durchschnittliches Molekulargewicht zwischen 5000 und 75000 liegt; jeder Block (B) besteht aus einem Elastomerpolymer, das von einem Monomer stammt, welches konjugierte Doppelbindungen enthält und ein durchschnittliches Molekulargewicht zwischen 15000 und 350000 aufweist. Die Gesamtkonzentration der Blöcke (A) liegt zwischen 10 und 85% des Gewichtes der gesamten Polymerkette;
b) 0 bis 150 Teilen anorganischer Füllstoffe, wie Karbonate, Sulfate, mehr oder weniger hydratierte Oxyde, Ca- und Mg-Silikate;
c) 0 bis 150 Teilen ausdehnenden Öls wie Paraffin- oder Naphtenöl;
d) 0 bis 150 Teilen verschiedener Wirkstoffe, Antioxydanse, Antistatika, UV-Strahlenschutzmittel, Stabilisatoren, ablösende Mittel, Fließhilsfmittel, Ausdehnmittel;
e) 0 bis 70 Teilen von radialen Blockelastomerpolymeren des Typs (A-B)x-BA, wobei x größer als 1 ist und (A) ein Polymer, das von einem Monoalkenylaren mit einem durchschnittlichen Molekulargewicht zwischen 5000 und 75000 stammt und wobei (B) ein Elastomerpolymer ist, das von einem C4 oder C5 konjugierten Diolefin mit einem durchschnittlichen Molekulargewicht zwischen 12000 und 300000 stammt; der besagte Block (A) entspricht 8 bis 90% des Gesamtgewichts des Polymers.

2. Polymerverbindungen nach Anspruch 1 bestehend aus
A) der o.g. Matrix (M)
und
B1) 0 bis 150 Teilen - im Vergleich mit dem sich in der Matrix (M) befindenden Mehrblockpolymer - eines Alkenylenpolymers, das von Monomereinheiten mit C4 bis zu C16 Kohlenstoffatomen stammt, in denen die Trans-Bindungen zwischen 60% und 100% der gesamten ungesättigten Bindungen darstellt.

3. Polymerverbindungen nach Anspruch 2, in denen das besagte Alkenylenpolymer des Typs -(CR1R2)x-C=C-(CR3R4)y ist, wobei x und y unabhängig zwischen 1 und 8 liegen können und R1, R2, R3, R4 gleich H oder einem Alkylradikal mit C1-C3 Kohlenstoffatomen sind.

4. Polymerverbindungen nach Anspruch 1 bestehend aus:
A) der Matrix (M)
und
B2) 0 bis 150 Teilen, im Vergleich mit dem sich in der Matrix (M) befindenden Mehrblockpolymer, eines Elastomerpolymers, das bei der Verarbeitung durch entsprechende, chemische oder physikalische, mit der absoluten Unveränderlichkeit der thermoplastischen Matrix verträglichen Mitteln vernetzt wird oder aus 5 bis 150 Teilen eines vorvernetzten und in die Verbindung eingesetzten Elastomers.

5. Polymerverbindungen nach Anspruch 4 in denen die besagten Füllstoffe Nitrilkautschuk, SBR-Kautschuk, EPDM-Kautschuk, Polyurethanelastomere, Polyesterelastomere sind; wobei die Größe der Teilchen der dispersen Matrix nach dem Dispersionprozeß kleiner als 1,0 Millimeter sein muß.

6. Polymerverbindungen nach Anspruch 1 bestehend aus
A) der Matrix (M)
und
B3) 0 bis 150 Teilen, im Vergleich mit dem sich in der Matrix (M) befindenden Mehrblockpolymer, eines nicht vernetzten, mit der Matrix teilweise verträglichen, thermoplastischen Elastomerpolymers in einer geeigneten Menge, um die Trennung der Matrix zu vermeiden.

7. Polymerverbindungen nach Anspruch 6 in denen die Komponente B3 Polyurethan, Polyester ist.

8. Polymerverbindungen nach Anspruch 1 bestehend aus einer Mischung, die die Matrix (M) und eine Kombination der o.g. Verbindungen (B1, B2 und B3) enthält.

9. Polymerverbindungen nach Anspruch 1, in denen die Komponente unter a) der Matrix (M) ein lineares Blockkopolymer oder eine Mischung davon, des Typs (A-B-B-A-)x oder auch (A-B-A-B-)x ist, wobei x gleich 1 oder höher als 1 ist und die Reihenfolge von (A) und (B) oder deren Mischung nicht unbedingt in der angegebenen Reihenfolge ist; wobei der Block (A) ein Polymer ist, das von einem Alkenylenaren stammt, dessen Alkenylkette 2 oder 3 Kohlenstoffatome enthalten kann und wobei der Block (B) ein Elastomer ist, das von einem Monomer stammt, welches konjugierte Doppelbindungen von 4 oder 5 Kohlenstoffatomen oder eine Mischung derselben enthält und wobei das durchschnittliche Molekulargewicht der vom Alkenylaren (Block A) stammenden Polymerblöcke zwischen 8000 und 50000, während das durchschnittliche Molekulargewicht des von der Monomerdieneinheit (C4-C5) stammenden Elastomerpolyolefins (Block B) zwischen 20000 und 130000 liegt und wobei die Konzentration des Blocks (A) vorzugsweise zwischen 20% und 60% liegt.

10. Polymerverbindungen nach Anspruch 9 in denen der Block (A) der Komponente a) der Matrix (M) aus Polystirenblöcken besteht.

11. Polymerverbindungen nach Anspruch 9 in denen der Block (B) der Komponente a) der Matrix (M) aus Polybutadien besteht.

12. Polymerverbindungen nach Anspruch 2 in denen die Komponente (B1) der Zusammensetzung TYP 1 ein Polyalkenylen des Typs -(CR1R2)X-C=C-C(CR3R4)Y-, wobei X und Y unabhängig zwischen 1 und 8 liegen können und R1, R2, R3, R4 gleich H oder einem Alkylradikal mit C1-3 Kohlenstoffatomen, vorzugsweise einem Polyheptenylen, Polyoktonylen oder einem Polynonenylen (Ausgangsmomomere (C7-9) ist.

13. Polymerverbindungen nach Anspruch 12 in denen der Gehalt an Trans-Doppelbindungen höher als 60%, vorzugsweise höher als 75% ist, während die Kristallinität höher als 15%, vorzugsweise höher als 30% ist.

14. Polymerverbindungen nach Anspruch 4 in denen die Komponente (B2) der Zusammensetzung TYP 2 ein vor- oder nachvernetztes Kopolymer oder Polymer ist.

15. Polymerverbindungen nach Anspruch 14 in denen die Komponente B2 Nitrilkautschuk, SBR, EPDM, Polyurethan, Polyester ist.

16. Polymerverbindungen nach Anspruch 6 in denen die Komponente (B3) der Zusammensetzung TYP 3 ein thermoplastisches Elastomerpolymer ist.

17. Polymerverbindungen nach Anspruch 16 in denen das thermoplastische Elastomerpolymer teilweise mit der linearen SBS-Matrix verträglich ist.

18. Polymerverbindungen nach Anspruch 16 in denen das thermoplastische Elastomerpolymer ein Polyurethan oder Polyester/Äther ist.

## Revendications

1. Composés polymères à base de polymères SBS pluribloc ayant pureté élevée, caractérisés en ce qu'ils comprennent un composé-matrice (M) éventuellement en combinaison avec des polymères polyalcèniliques, élastomères pré ou post-réticulés, élastomères thermoplastiques ou leurs mélanges, là où ledit composé-matrice (M) est formé:
a) de 100 parties en poids de un ou de plusieurs copolymères linéaires pluribloc du type (A-B-B-A)x ou (A-B-A-B-)x, étant x=1 ou majeur de 1 et la séquence d'unités (A) et (B), ou mélange des deux, non nécessairement dans l'ordre présenté; là où la pureté du ledit copolymère pluribloc est supérieure à 93% et le contenu en di-bloc et homopolymères est inférieur à 5%; chaque bloc (A) étant formé d'un polymère dérivé d'un mono-alcène-arène (étant le groupe alcènilique maximum C3), ayant un poids moléculaire moyen pondéral entre 5000 et 7500; chaque bloc (B) étant formé d'un polymère élastomère dérivé d'un monomère contenant des liaisons doubles conjuguées et dont le poids moléculaire moyen pondéral est compris entre 15000 et 35000. La concentration totale des blocs (A) peut être comprise entre 10 et 85% en poids de toute la chaîne copolymère.
b) de 0 à 150 parties de charge ou charges inorganiques type carbonates, sulfates, oxydes plus ou moins hydratés, silicates de Ca, Mg;
c) de 0 à 150 parties d'huile extensive du type paraffine ou naphtène;
d) de 0 à 150 parties d'additifs divers, antioxydants, antistatiques, anti UV, stabilisants, détachants, adjuvants de glissement, expansibles;
e) de 0 à 70 parties de polymères élastomères radiaux à blocs du type (A-B)x-BA, où x est majeur de 1, étant (A) un polymère dérivé d'un mono-alcène-arène dont le poids moléculaire moyen pondéral varie entre 5000 et 75000 et étant (B) un polymère élastomère dérivé d'une oléfine diénique conjuguée C4 ou C5 avec un poids moléculaire moyen pondéral variant entre 12000 et 300000; ledit bloc (A) étant compris entre le 8% et le 90% du poids total du polymère.

2. Composés polymères selon la revendication 1 constitués:
A) de la susdite matrice (M)
et
B1) de 0 à 150 parties, par rapport à la quantité de polymère linéaire pluribloc présent dans la matrice (M), d'un polymère alcènilène dérivé d'unités monomères, ayant de C4 à C16 atomes de carbone, avec un contenu de liaisons trans entre le 60% et le 100% du total des liaisons insaturées.

3. Composés polymères selon la revendication 2, là où ledit polymère alcènilène est du type -(CR1R2)x-C=C-(CR3R4)y- avec x et y qui peuvent varier indépendamment de 1 à 8 et R1, R2, R3, R4=H ou radical alchylique avec C1-C3 atomes de carbone.

4. Composés polymères selon la revendication 1, constitués:
A) de la matrice M
et
B2) de 0 à 150 parties, par rapport à la quantité de polymère linéaire pluribloc présent dans la matrice (M), d'un polymère élastomère réticulé pendant le processus avec des moyens chimiques ou physiques adéquats et compatibles avec l'absolue invariabilité de la matrice thermoplastique élastomère ou de 5 à 150 parties d'un élastomère pré-réticulé et introduit dans le composé.

5. Composés polymères selon la revendication 4 où lesdites charges sont: des caoutchoucs nitriles, des caoutchoucs SBR, des caoutchoucs EPDM, des élastomères polyuréthannes, des élastomères polyesters; étant prévu que le processus de dispersion porte de toutes façons à des dimensions des parcelles de la matrice dispersée inférieures à 1,0 millimètres.

6. Composés polymères selon la revendication 1, constitués:
A) de la matrice M
et
B3) de 0 à 150 parties, par rapport à la quantité de polymère linéaire pluribloc présent dans la matrice (M), d'un polymère thermoplastique élastomère non réticulé, partiellement compatible avec la matrice (M), en quantité opportune afin de ne pas créer des phénomènes de séparation des matrices.

7. Composés polymères selon la revendication 6 où le composant B3 est polyuréthanne, polyester.

8. Composés polymères selon la revendication 1, constitués d'un mélange formé par la matrice (M) et par une combinaison des susdits produits (B1, B2, B3).

9. Composés polymères selon la revendication 1 où le composant dont au point a) de la matrice (M) est un copolymère à blocs linéaire, ou un mixage de linéaires, du type (A-B-B-A-)x ou même (A-B-A-B-)x, étant x=1 ou majeur de 1 et la séquence de (A) et (B) ou mélange des deux non nécessairement dans l'ordre présenté; le bloc (A) étant un polymère dérivé d'un alcène-arène dont la chaîne alcènilique peut être de 2 ou 3 atomes de carbone; le bloc (B) étant un élastomère dérivé d'un monomère contenant des doubles liaisons conjuguées de 4 ou 5 atomes de carbone, ou mélange d'eux; étant également prévu que le poids moléculaire moyen pondéral des blocs polymères dérivés de l'alcène-arène (bloc A) soit compris entre 8000 et 50000, tandis que le poids moléculaire moyen pondéral de la polyoléfine élastomère (bloc B), dérivée de l'unité monomère diénique (C4-C5), soit compris entre 20000 et 130000; étant finalement prévu que la concentration du bloc (A) soit préférablement comprise entre le 20% et le 60%.

10. Composés polymères selon la revendication 9 où le bloc (A) du composant a) de la matrice (M) est constitué de blocs de polystyrène.

11. Composés polymères selon la revendication 9 où le bloc (B) du composant a) de la matrice (M) est constitué de polybutadiène.

12. Composés polymères selon la revendication 2 où le composant B1) de la composition TYPE 1 est un polyalcène du type -(CR1R2)X-C=C-(CR3R4)Y- avec X et Y qui peuvent varier indépendamment de 1 à 8 et R1, R2, R3, R4=H ou est un radical alchylique avec C1-3 atomes de carbone, préférablement un poly-heptenylène, poly-octenylène ou un poly-nonenylène (monomères de départ (C7-9)).

13. Composés polymères selon la revendication 12 où le contenu en doubles liaisons trans est supérieur au 60%, préférablement supérieur au 75%, tandis que la cristallinité est supérieure au 15%, préférablement supérieure au 30%.

14. Composés polymères selon la revendication 4 où le composant (B2) de la composition TYPE 2 est un polymère ou un copolymère pré ou post-réticulé.

15. Composés polymères selon la revendication 14 où le composant B2 est: nitrile (caoutchouc), SBR, EPDM, polyuréthannes, polyesters.

16. Composés polymères selon la revendication 6 où le composant (B3) de la composition TYPE 3 est un polymère thermoplastique élastomère.

17. Composés polymères selon la revendication 16 où le polymère thermoplastique élastomère est partiellement compatible avec la matrice SBS linéaire.

18. Composés polymères selon la revendication 16 où le polymère thermoplastique élastomère est de la famille des polyuréthannes ou des polyesters/éthérée.
